# FASCICULE DE BREVET EUROPEEN

(11) **EP 0 705 798 B1**
(45) Date de publication et mention de la délivrance du brevet: **08.03.2000**
(21) Numéro de dépôt: 95402205.9
(22) Date de dépôt: 03.10.1995
(51) Int. Cl.: C03B 23/027, C03B 23/025

(54) **Procédé et dispositif pour le bombage de feuilles de verre**
Verfahren und Vorrichtung zum Biegen von Glasscheiben
Method and apparatus for bending glass sheets

(30) Priorité: 04.10.1994 FR 9411837
(43) Date de publication de la demande: 10.04.1996
(73) Titulaire: SAINT-GOBAIN VITRAGE, 92400 Courbevoie (FR)
(72) Inventeur: Muller, Marco, D-52078 Aachen (DE); Olfisch, Karl-Josef, NL-6462 SW Kerkrade (NL); Kuster, Hans-Werner, Dr., D-52066 Aachen (DE); Didelot, Claude, F-60150 Thourotte (FR)
(74) Mandataire: Muller, René

(56) Documents cités:
- AU-B- 603 958
- FR-A- 1 230 952
- US-A- 4 015 969

## Description

La présente invention concerne un procédé et un dispositif de bombage par gravité de feuilles de verre sur un cadre ou squelette de bombage.

On connaît d'après la publication EP-A-0 448 447 un procédé et un dispositif de bombage par gravité de feuilles de verre en au moins deux étapes successives. Dans une première étape les feuilles de verre sont bombées par gravité selon une première forme correspondant à une ébauche de la forme définitive, puis dans une deuxième étape les feuilles de verre sont bombées par gravité selon la forme définitive.

Pour mettre en oeuvre ce procédé, on utilise un cadre dit ébauche pour la première étape et un cadre dit définitif pour la deuxième étape. Le cadre définitif avec lequel on effectue le bombage définitif dans la deuxième étape de bombage peut être un anneau fermé autonome qui est disposé à l'intérieur du cadre ébauche ou à l'extérieur à une faible distance. En variante, le cadre de bombage définitif peut être formé de parties du cadre ébauche et de parties supplémentaires mobiles. Ainsi il est possible d'associer au cadre ébauche des parties latérales symétriques qui se replient vers le haut pour l'opération de bombage définitif en formant ainsi un cadre définitif aux parties latérales plus recourbées tandis que la partie médiane est commune avec celle du cadre ébauche.

Ce procédé connu convient notamment pour le bombage de feuilles de verre de forme complexe et/ou de feuilles de verre présentant un double bombage prononcé et/ou pour les feuilles de verre sujettes à un contre-bomgage dans des zones critiques.

Lorsque dans un tel procédé ou dispositif le transfert de la feuille de verre bombée sous forme d'ébauche sur le cadre définitif ne s'effectue pas de manière régulière c'est-à-dire symétriquement par rapport à l'axe de symétrie, dans le cas où les feuilles de verre bombées doivent présenter une telle symétrie, il peut se produire des défauts de courbures par rapport aux courbures désirées, ce qui peut nuire en outre à la qualité optique des feuilles de verre.

Un transfert non régulier entre les deux cadres peut se produire lorsque les deux parties latérales extrêmes de la feuille de verre ne sont pas reprises au même moment par le cadre définitif. Dans ce cas, en effet, les forces s'exerçant sur les parties latérales de la feuille de verre amollie ne sont pas identiques et simultanées. Il s'ensuit un bombage asymétrique non désiré de la feuille de verre ce qui peut en outre nuire à sa qualité optique.

L'invention propose un procédé et un dispositif qui pallient aux inconvénients cités.

Le procédé de bombage sur cadre d'au moins une feuille de verre par gravité conformément à l'invention comprend au moins deux étapes pour le bombage proprement dit au cours desquelles la ou les feuilles de verre subissent une modification de leur forme par gravité en étant supportée(s) en périphérie suivant une première ligne périphérique au cours de la première étape et suivant une deuxième ligne périphérique au cours de la deuxième étape, avec passage de la ou des feuilles de verre de la première ligne à la deuxième ligne, dans lequel ce passage s'effectue en maîtrisant à tout moment l'action des forces s'exerçant sur les parties de la ou des feuilles de verre venant au contact de la deuxième ligne périphérique, par réaction de cette deuxième ligne périphérique au contact de la ou des feuilles de verre.

Sous un des aspects de l'invention le passage entre les deux lignes périphériques s'effectue en équilibrant à tout moment l'action des forces s'exerçant sur des parties symétriques de la ou des feuilles de verre venant au contact des lignes périphériques.

L'équilibre de l'action des forces peut être réalisé par un pivotement ou un basculement d'une ligne périphérique par rapport à l'autre, c'est-à-dire par le pivotement du plan moyen d'une ligne par rapport au plan moyen de l'autre ligne.

Lorsque la ou les feuilles de verre bombées doivent présenter une symétrie, l'équilibre de l'action des forces selon l'invention peut être réalisé par un montage d'au moins une des deux lignes périphériques en pivot autour d'un axe horizontal. Comme décrit dans l'EP-A-0 448 447 déjà cité et duquel l'homme de métier pourra tirer l'enseignement nécessaire, les deux lignes périphériques peuvent être entièrement distinctes l'une de l'autre, l'une étant disposée à l'intérieur de l'autre, la substitution d'une ligne par l'autre s'opèrent par exemple soit par une élévation du niveau de la deuxième ligne par rapport au niveau de la première, soit par un abaissement du niveau de cette première ligne, ou encore par la combinaison de ces deux mouvements.

En variante, la deuxième ligne périphérique peut être distincte en parties seulement de la première ligne. La distinction ou différence peut porter sur les parties latérales des deux lignes.

Dans ce cas, la différence consiste généralement en ce que les parties latérales de la deuxième ligne présentent des courbures plus accentuées et sont placées en position de travail à un niveau supérieur au niveau des parties latérales de la première ligne.

Les lignes périphériques sont généralement des lignes continues, en particulier pour la ligne définissant la forme bombée définitive de la ou des feuilles de verre, bien qu'une ligne formée de plusieurs points ou segments disposés en des emplacements adéquats puisse également convenir.

La ligne périphérique correspondant à la première étape de bombage peut être intérieure ou extérieure à la ligne périphérique correspondant à l'autre étape de bombage.

Chacune des deux lignes périphériques peut aussi avoir une forme qui varie au cours d'une étape de bombage.

Sous un des aspects de l'invention, l'équilibre de l'action des forces s'exerçant sur les parties désirées de la feuille de verre s'établit par réaction d'un ou des deux cadres sous l'action de contact de la feuille de verre avec ces cadres.

L'invention concerne aussi un dispositif ou double cadre de bombage comprenant deux cadres : un premier cadre ou cadre ébauche destiné à supporter la périphérie de la ou des feuilles de verre à bomber durant une première étape de bombage, un deuxième cadre ou cadre définitif se substituant au premier pour supporter la périphérie de la ou des feuilles de verre durant la deuxième étape de bombage et des moyens pour maîtriser à tout moment les forces exercées sur la ou les feuille de verre au cours du passage de celles-ci du premier cadre au deuxième cadre, qui agissent par réaction du deuxième cadre au contact de la ou des feuilles de verre.

Par cadre ébauche, on entend selon l'invention le cadre sur lequel s'effectue une première opération de bombage de la ou des feuilles de verre par gravité. Par cadre de bombage définitif ou cadre définitif, on entend selon l'invention le cadre sur lequel s'effectue l'étape suivante de bombage par gravité qui correspond principalement à l'étape définitive de bombage, et qui procure le bombage final désiré. Plus généralement le cadre ébauche est le cadre sur lequel se réalise une opération ou étape de bombage par gravité et le cadre définitif le cadre sur lequel se réalise l'opération ou l'étape suivante de bombage par gravité sachant qu'éventuellement d'autres étapes de bombage peuvent précéder et/ou suivre les deux étapes évoquées.

Dans la suite de la description on utilisera l'expression une feuille de verre ou la feuille de verre aussi bien pour une seule feuille de verre que pour deux feuilles de verre empilées et éventuellement plus de deux feuilles de verre empilées.

Les moyens pour maîtriser les forces exercées sur la feuille de verre peuvent être un montage pivotant et équilibré d'un cadre par rapport à l'autre ou plus généralement un montage permettant le basculement du plan moyen d'un cadre par rapport au plan moyen de l'autre cadre.

Ainsi, selon une réalisation du dispositif selon l'invention au moins l'un des deux cadres de bombage a la forme d'un anneau rigide monté pivotant et de manière équilibrée sur un axe situé dans le plan de symétrie du dispositif.

Le montage pivotant à la façon d'une balance romaine à bras égaux provoque un basculement du cadre lorsque les forces exercées sur la feuille de verre de part et d'autre de l'axe de symétrie ne sont pas équivalentes. En revanche lorsque les forces exercées sont équivalentes le cadre est à l'équilibre.

L'axe de pivotement peut être situé aussi bien au-dessus, qu'en dessous ou encore dans l'axe de la feuille de verre.

Lorsque le cadre ébauche est monté pivotant selon une réalisation conformément à l'invention, le dispositif fonctionne de la manière suivante : lors du transfert de la feuille de verre prébombée du cadre ébauche sur le cadre définitif le premier contact de la feuille de verre avec le cadre définitif se produit dans les parties latérales extrêmes plus élevées de ce cadre définitif. Si pour une raison quelconque la feuille de verre n'entre pas simultanément en contact avec les parties extrêmes plus élevées des deux côtés mais est d'abord en contact avec un côté, alors le cadre ébauche déchargé de ce côté du poids de la feuille bascule de l'autre côté jusqu'à ce que la feuille de verre arrive au contact du cadre définitif ce qui décharge sur ce côté le cadre ébauche. Il se produit un équilibrage de manière continue et rapide des forces latérales exercées sur la feuille de verre jusqu'à son transfert total sur le cadre définitif. On obtient finalement un bombage bien symétrique lorsqu'une telle symétrie est recherchée et aussi régulier que souhaité pour la feuille de verre.

Dans une variante du dispositif selon l'invention, ce peut être le cadre définitif qui est monté pivotant et en équilibre autour d'un axe.

Dans une autre variante du dispositif, les deux cadres sont montés pivotant et en équilibre.

Dans un mode de réalisation de l'invention un cadre est formé de plusieurs parties articulées entre-elles.

Le cadre ébauche peut présenter une forme variable. Dans sa réalisation la plus simple il se compose d'un cadre plan sur la périphérie duquel la feuille de verre repose dès le début du bombage.

La conformation du cadre ébauche permet également d'influencer la forme définitive de la feuille de verre.

D'autres moyens permettant une maîtrise ou un réglage des forces exercées sur la feuille de verre lors de son passage d'un cadre à l'autre peuvent être prévus. Ces moyens peuvent être un montage d'au moins un des deux cadres sur un système élastique tels que des ressorts, un coussin d'air, ou des systèmes utilisant des contrepoids par exemple, l'objectif étant d'équilibrer les forces exercées sur la feuille de verre par rapport à son axe de symétrie lorsqu'elle présente un tel axe de symétrie ou par rapport à d'autres axes ou repères lorsque la feuille de verre bombée ne présente pas une telle symétrie.

D'autres montages et caractéristiques de l'invention apparaîtront dans la description suivante d'exemples de réalisation du dispositif faite en relation aux figures.

La figure 1 représente un dispositif de bombage disposé sur un chariot mobile, le cadre ébauche étant en position de travail.

La figure 2 représente le dispositif de la figure 1 avec le cadre définitif en position de travail.

Les figures 3A, 3B, 3C représentent un détail de construction de l'articulation concernant le pivotement du cadre ébauche.

La figure 4 représente une variante du dispositif selon l'invention.

Les figures 5A et 5B représentent un détail de la variante selon la figure 4.

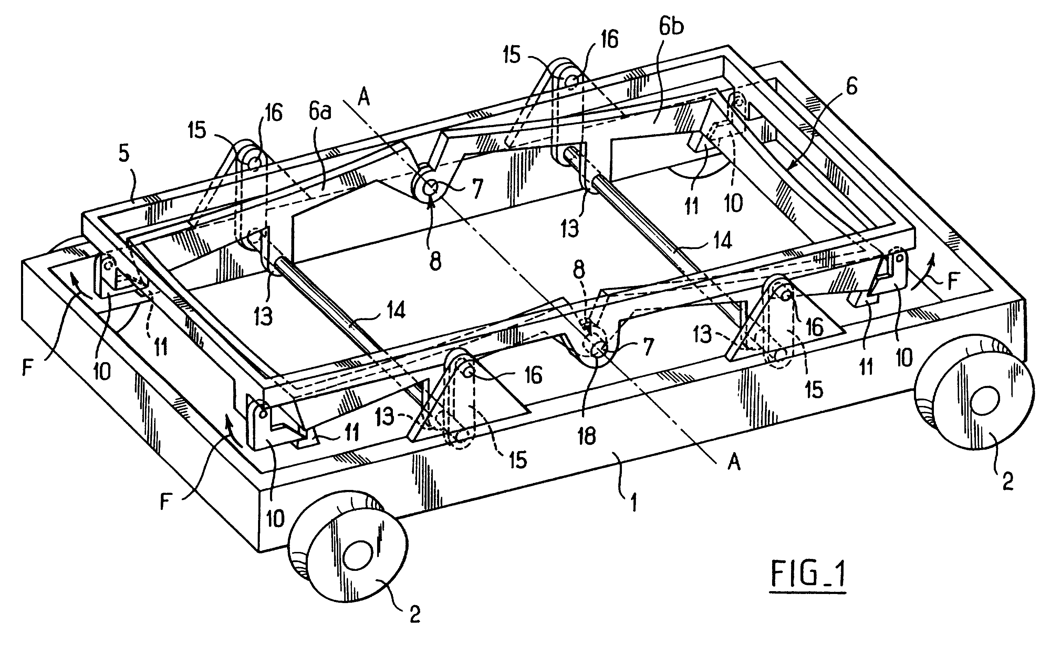

Le dispositif de bombage représenté sur les figures 1 à 3 est placé sur un chariot mobile 1. Le chariot 1 pourvu de roues 2 peut se déplacer sur des rails à travers un four de bombage par gravité (non représentés). Dans un four de bombage par gravité, dès que la feuille de verre déposée sur le dispositif de bombage atteint sa température de déformation la feuille se bombe par gravité en s'appliquant par sa partie périphérique sur un cadre de bombage. Cette technique de bombage sur cadre par gravité est utilisée et bien connue notamment pour le bombage par paire des feuilles de verre qui sont ensuite assemblées pour former un vitrage feuilleté.

Le dispositif selon l'invention décrit ici comprend deux cadres de bombage : un cadre ébauche 5 et un cadre définitif 6 procurant la forme de bombage définitive. Ce cadre définitif est ici formé de deux demi-cadres 6a et 6b, les deux parties symétriques 6a et 6b étant reliées entre-elles par les articulations 8 disposées autour des axes 7 placés dans l'axe général A-A et montés sur des coussinets de pivotement 18 du cadre ébauche 5. Le cadre ébauche 5 et les deux demi-cadres 6a et 6b formant le cadre définitif sont disposés de façon telle que le cadre ébauche 5 est situé à un niveau supérieur lors de la première étape de bombage. Ainsi, dans cette position, une feuille de verre posée sur le cadre ébauche 5 ne vient pas au contact des demi-cadres 6a et 6b. Dans cette position, le cadre ébauche s'appuie par l'intermédiaire de quatre verrous pivotants 10, disposés aux quatre coins du cadre ébauche sur des éléments d'appui 11 fixés aux quatre coins des demi-cadres 6a et 6b. Le poids du cadre ébauche 5 maintient ainsi les deux demi-cadres 6a et 6b en position basse (ou position ouverte).

Le cadre ébauche 5 est en outre pourvu dans son plan de symétrie passant par l'axe A-A de deux coussinets de pivotement 18 disposés autour du même axe de pivotement A-A que les deux articulations 8 des demi-cadres 6a et 6b. Par suite de cet assemblage du cadre ébauche 5 avec les demi-cadres 6a et 6b, ceux-ci sont amenés automatiquement à la position de repos représentée à la figure 1 lorsque le cadre ébauche 5 est relevé et fixé en position par les verrous 10.

Les demi-cadres 6a et 6b sont articulés autour des arbres 14 par l'intermédiaire des coussinets 13. Les arbres 14 sont montés oscillant par l'intermédiaire de leviers 15 articulés sur des axes 16 portés par des paliers-coussinets 17 montés eux-mêmes sur le chariot 1.

Dans le four de bombage (non représenté) est prévue une station de transfert de la feuille de verre prébombée en forme d'ébauche pour la transférer du cadre ébauche 5 au cadre définitif 6. A cet effet, les verrous 10 sont retirés des éléments d'appui 11 par un mouvement de basculement dans le sens de la flèche F opéré au moyen d'un dispositif approprié non représenté. Le poids du cadre ébauche augmenté de celui de la feuille de verre est ainsi transféré sur l'articulation 8 ce qui fait pivoter les demi-cadres 6a et 6b vers le haut et abaisse en même temps le cadre ébauche 5. Comme ce cadre ébauche 5 repose uniquement sur deux coussinets de pivotement pendant qu'il est abaissé de sa position supérieure de travail à sa position inférieure de repos, il peut osciller autour de l'axe A-A pendant le transfert ce qui permet selon l'invention l'équilibrage des forces sur les feuilles de verre.

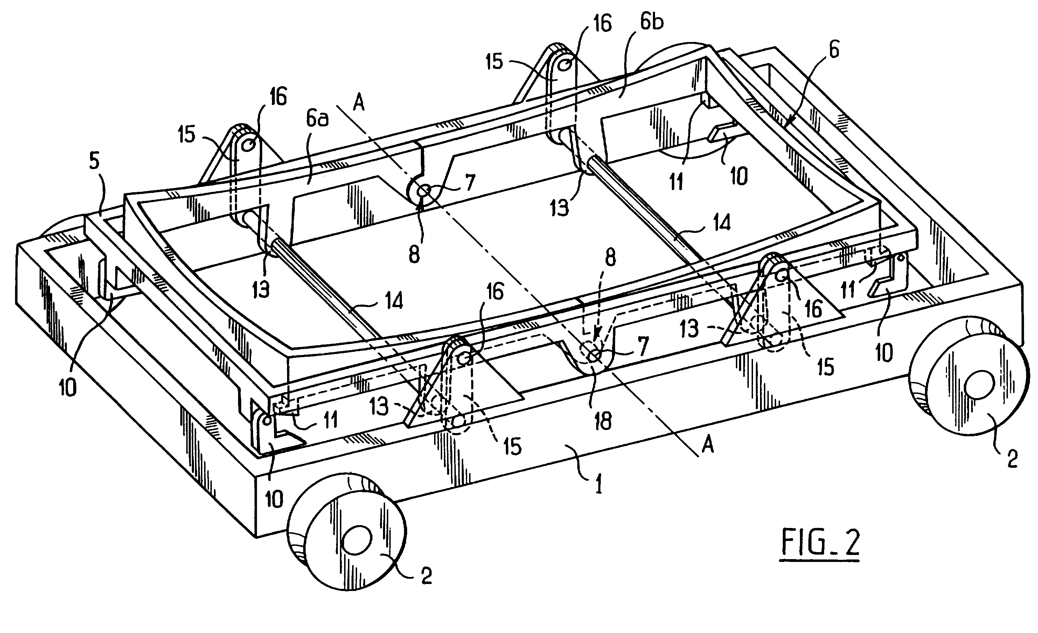

Dans la position de travail du cadre définitif 6 telle que représentée sur la figure 2, le cadre ébauche 5 s'est abaissé jusqu'à ce que la feuille de verre repose sur le cadre définitif 6.

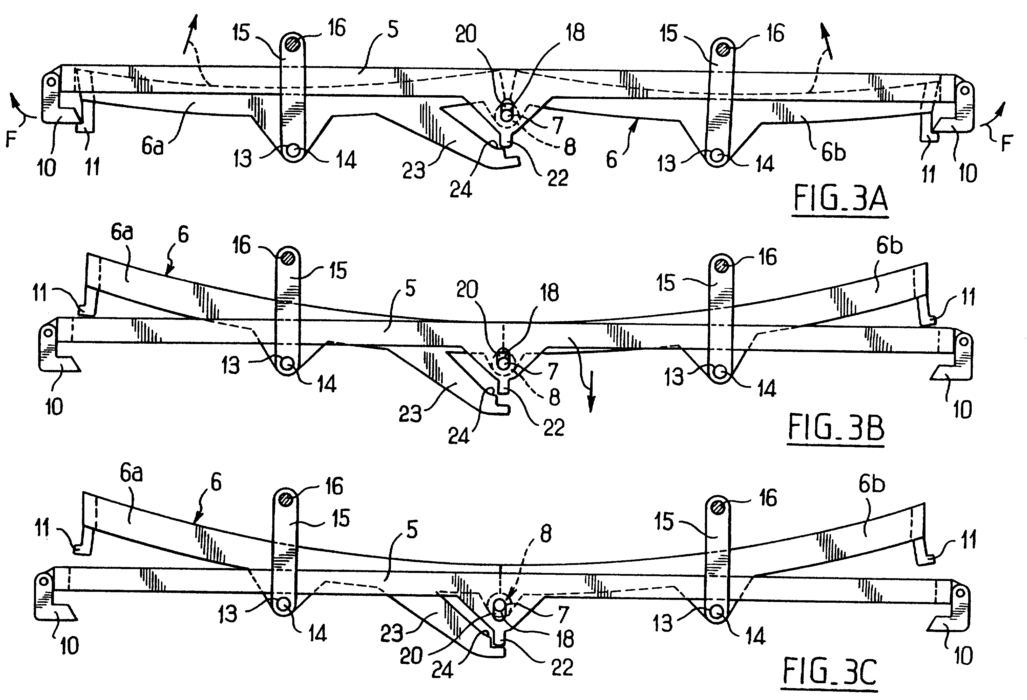

Si l'on désire abaisser le cadre ébauche 5 nettement en dessous du cadre définitif 6, on peut donner au trou des coussinets de pivotement 18 la forme d'un trou oblong 20 dans le sens vertical tel que représenté sur la figure 3.

Sur la figure 3A, lorsque le cadre ébauche 5 est placé dans sa position de travail, la partie inférieure du trou oblong 20 s'appuie sur le dessous de l'axe 7 de l'articulation 8, ce qui ouvre les deux demi-arbres 6a et 6b et ce qui enclenche les verrous 10 qui verrouillent ainsi cette position.

Pour amener le cadre définitif à sa position de travail les verrous 10 sont déclenchés. Grâce à une répartition adéquate du poids des parties des demi-cadres 6a et 6b des deux côtés des coussinets de pivotement 13, les deux demi-cadres 6a et 6b se ferment autour de l'articulation 8, les parties voisines de cet axe s'abaissant en même temps que les parties extrêmes se lèvent pour reprendre la feuille de verre du cadre ébauche 5.

La position finale de travail du cadre définitif est représentée sur la figure 3B. Durant le mouvement de basculement, le cadre ébauche s'appuie par l'intermédiaire d'une saillie 22 disposée sous le trou oblong 20 sur la surface incurvée 24 d'un bras 23 solidaire du demi-cadre 6a. Une construction appropriée des surfaces de glissement est prévue pour ne pas gêner le pivotement du cadre ébauche autour de l'articulation 8.

Quand les demi-cadres 6a et 6b ont atteint leur position extrême et que le transfert de la feuille de verre du cadre ébauche aux deux demi-cadres formant le cadre définitif est achevé, la saillie 22 a atteint l'extrémité de la surface incurvée 24 du bras 23. A ce moment le cadre ébauche n'est plus soutenu par la surface incurvée 24 et il s'affaisse de la hauteur du trou oblong 20. La position atteinte alors est représentée dans la figure 3C. On s'assure ainsi que la feuille de verre n'est plus du tout en contact avec le cadre ébauche.

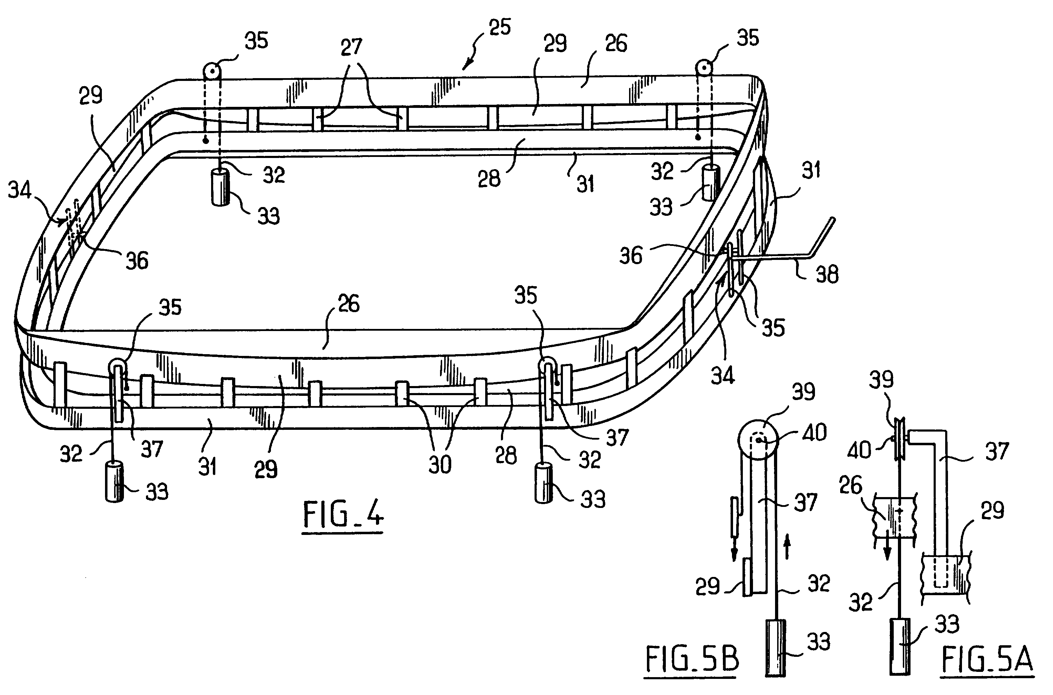

Le dispositif 25 représenté sur la figure 4 et partiellement, plus en détail, sur les figures 5A et 5B (en vue de côté et vue de face), comprend un cadre ébauche 26 monté par l'intermédiaire de pattes 27 sur un support 28 également en forme de cadre, et un cadre définitif 29 lui aussi monté par l'intermédiaire de pattes 30 sur un support 31 en forme de cadre.

Le cadre ébauche 26 et son support 28 sont disposés à l'intérieur des périphéries du cadre définitif 29 et de son support 31, respectivement. Les deux supports 28 et 31 peuvent être disposés sur un chariot non représenté permettant le déplacement du dispositif à travers le four de bombage. Le cadre ébauche 26 et son support 28 sont montés en équilibre sur le cadre définitif 29 et son support 31 par l'intermédiaire de quatre câbles 32 et sous l'action de contrepoids 33 comme décrit plus en détail par la suite, notamment en relation avec les figures 5A et 5B.

Deux glissières 34 formées chaque fois de deux tiges verticales 35 montées sur le support du cadre définitif en deux emplacements opposés servent de guides à deux doigts 36 montés solidairement sur le support du cadre ébauche lors du mouvement vertical relatif d'un cadre par rapport à l'autre.

Comme représenté plus en détail et partiellement sur les figures 5A et 5B (en vue de face et de profil) le montage du cadre ébauche 26 et de son support 28 sur le cadre définitif 29 et son support 31 est réalisé par l'intermédiaire de quatre câbles 32 dont une extrémité 34 est chaque fois fixée au support 28 du cadre ébauche 26, sensiblement aux quatre coins de ce support 28, les quatre câbles 32 passant autour de poulies 39 dont les axes 40 sont portés par des potences 37 fixées au support 31 du cadre définitif, et se terminant par des contrepoids 33. Le poids total des quatre contrepoids 33 correspond sensiblement au poids du cadre ébauche 26 et de son support 28. Une tringlerie 38 permet de bloquer le cadre ébauche dans sa position haute qui correspond à sa position de travail, en s'appliquant par exemple sous les doigts 36 dans les glissières 34.

Le dispositif fonctionne de la manière suivante :

La (ou les) feuille(s) de verre étant placée(s) sur le cadre ébauche 26 disposé et bloqué par la tringlerie 38 dans sa position haute de travail, comme représenté sur la figure 4, l'ensemble du dispositif passe dans le four de bombage.

Au cours de la première opération de bombage, la feuille de verre est en appui sur la périphérie du cadre ébauche. Lorsque la feuille de verre atteint sa forme de bombage ébauche désirée, le cadre ébauche 26 est débloqué par action sur la tringlerie 38, de sa position haute. Sous l'effet du poids de la feuille de verre, le cadre ébauche s'abaisse selon les flèches représentées sur les figures 5A et 5B, de manière équilibrée en étant supporté par les quatre câbles 32 et les contrepoids 33 qui remontent, et guidé par les doigts 36 dans les glissières 35 pour amener la feuille de verre au contact du cadre définitif. Le contact s'effectue de façon maîtrisée et équilibrée. Le cadre ébauche peut éventuellement pivoter partiellement au cours de ce contact autour de l'axe formé par les deux doigts 36. Le mouvement de baisse du cadre s'effectue ici sous l'influence sensiblement du seul poids de la (ou des) feuille(s) de verre. On peut aussi modifier le poids des contrepoids pour modifier les forces de contact entre la feuille de verre et le cadre définitif. L'opération de bombage se poursuit, la feuille de verre étant supportée par le cadre définitif.

On peut aussi, bien évidemment, monter les deux cadres à l'inverse de ce qui a été décrit précédemment, c'est-à-dire monter le cadre définitif en équilibre sur le cadre ébauche et obtenir ainsi un mouvement de montée du cadre définitif par rapport au cadre ébauche pour le transfert de la feuille de verre.

Le dispositif selon l'invention envisage en fait tous les moyens de montage en équilibre d'un cadre sur l'autre permettant un mouvement relatif de montée-baisse d'un cadre vis-à-vis de l'autre.

La périphérie du cadre ébauche peut aussi bien passer à l'intérieur de la périphérie du cadre définitif que réciproquement.

Le procédé et le dispositif selon l'invention permettant de régler et réguler les forces s'exerçant sur la feuille de verre sont applicables à tout procédé de bombage nécessitant le transfert d'une ou de plusieurs feuilles de verre d'un cadre à un autre pour passer d'une étape de bombage à une étape suivante de bombage.

Les feuilles de verre bombées obtenues par la mise en oeuvre du procédé et du dispositif selon l'invention présentent une grande régularité dans les courbures désirées.

## Revendications

1. Procédé pour le bombage sur cadre d'au moins une feuille de verre par gravité au cours duquel la ou les feuilles de verre empilées, disposées sur un cadre de bombage sont élevées à la température de déformation et viennent épouser le profil du cadre de bombage par effet de gravité, comprenant au moins deux étapes de bombage par gravité en étant supportée(s) en périphérie suivant une première ligne périphérique au cours de la première étape et suivant une deuxième ligne périphérique au cours de la deuxième étape, avec passage d'une ligne périphérique à l'autre, **caractérisé en ce qu'**on réalise le passage de la première ligne périphérique à la deuxième ligne périphérique en maîtrisant à tout moment l'action des forces s'exerçant sur les parties de la ou des feuilles de verre venant au contact de la deuxième ligne périphérique, par réaction de cette deuxième ligne périphérique au contact de la ou des feuilles de verre.

2. Procédé selon la revendication 1, **caractérisé en ce qu'**on réalise le passage d'une ligne périphérique à l'autre en équilibrant à tout moment l'action des forces s'exerçant sur des parties symétriques de la ou des feuilles de verre.

3. Procédé selon une des revendications 1 ou 2, **caractérisé en ce qu'**on équilibre l'action des forces par un pivotement d'une ligne périphérique par rapport à l'autre.

4. Dispositif pour le bombage sur cadre par gravité d'au moins une feuille de verre comprenant au moins deux cadres : un premier cadre (5) destiné à supporter la périphérie de la ou des feuilles de verre à bomber durant une première étape de bombage, un deuxième cadre (6) se substituant au premier pour supporter la périphérie de la ou des feuilles de verre durant la deuxième étape de bombage **caractérisé en ce qu**'il comprend des moyens (7, 8, 13, 14, 15, 16, 32, 33) pour maîtriser l'action des forces s'exerçant sur la ou les feuilles de verre au cours du passage de celles-ci du premier cadre (5) au deuxième cadre (6), qui agissent par réaction du deuxième cadre au contact de la ou des feuilles de verre.

5. Dispositif selon la revendication 4, **caractérisé en ce que** les moyens (7, 8, 13, 14, 15, 16) pour maîtriser l'action des forces s'exerçant sur la ou les feuilles de verre comprennent le montage pivotant et équilibré d'un cadre par rapport à l'autre.

6. Dispositif selon une des revendications 4 ou 5, **caractérisé en ce qu'**au moins un (6) des deux cadres est monté pivotant et de manière équilibrée sur un axe (7) situé dans le plan de symétrie du dispositif.

7. Dispositif selon l'une des revendications 4 à 6, **caractérisé en ce que** le premier cadre (5 ; 26) et le deuxième cadre (6 ; 29) ont tous deux la forme d'anneaux continus rigides et sont montés de façon à ce que le transfert entre le premier cadre et le deuxième cadre s'effectue par un mouvement de translation vertical.

8. Dispositif selon une des revendications 4 à 6, **caractérisé en ce que** le premier cadre (5) a la forme d'un anneau rigide et **en ce que** le deuxième cadre (6) comprend des parties pivotantes, le transfert entre le premier cadre (5) et le deuxième cadre (6) s'effectuant par un mouvement des parties pivotantes.

9. Dispositif selon la revendication 8, **caractérisée en ce que** le deuxième cadre (6) est formé de deux demi-cadres symétriques (6a, 6b) reliés entre eux par une articulation disposée dans le plan de symétrie.

10. Dispositif selon la revendication 9, **caractérisé en ce que** les deux demi-cadres (6a, 6b) sont montés pivotant sur des coussinets (13) montés en pendule au bout de leviers (15).

11. Dispositif selon une des revendications 9 ou 10, **caractérisé en ce que** l'axe de pivotement (A-A) du premier cadre et l'axe des articulations (8) coïncident.

12. Dispositif selon une des revendications 9 à 11, **caractérisé en ce que** le premier cadre (5) et les deux demi-cadres (6a, 6b) sont verrouillés ensemble par des verrous pivotants (10), dans la position de travail du premier cadre.

13. Dispositif selon une des revendications 9 à 12, **caractérisé en ce que** le coussinet de pivotement (18) du premier cadre présente la forme d'un trou oblong (20) de sorte que le premier cadre peut s'abaisser sous le niveau du deuxième cadre quand celui-ci est en position de travail.

14. Dispositif selon une des revendications 4 à 13, **caractérisé en ce que** les deux cadres sont disposés sur un chariot mobile (1).

## Patentansprüche

1. Verfahren zum Rahmenbiegen mindestens einer Glasscheibe durch Schwerkraft, bei dem die auf einen Biegerahmen aufgelegte Glasscheibe oder gestapelten Glasscheiben auf die Verformungstemperatur aufgeheizt werden und sich durch Schwerkraftwirkung an das Profil des Biegerahmens anpassen, wobei sie mindestens zwei Schwerkraft-Biegeschritte erfahren, indem sie beim ersten Schritt entlang einer ersten Umfangslinie und beim zweiten Schritt entlang einer zweiten Umfangslinie abgestützt werden unter Übergabe von einer Umfangslinie zur anderen, **dadurch gekennzeichnet**, daß die Übergabe von der ersten Umfangslinie zur zweiten Umfangslinie realisiert wird, indem man in jedem Moment die Wirkung der auf die mit der zweiten Umfangslinie in Kontakt kommenden Partien der Glasscheiben einwirkenden Kräfte durch Reaktion dieser zweiten Umfangslinie auf den Kontakt mit den Glasscheiben steuert.

2. Verfahren nach Anspruch 1, **dadurch gekennzeichnet**, daß die Übergabe von der ersten Umfangslinie zur zweiten Umfangslinie realisiert wird, indem man in jedem Moment die Wirkung der auf die symmetrischen Abschnitte der Glasscheiben einwirkenden Kräfte im Gleichgewicht hält.

3. Verfahren nach Anspruch 1 oder 2, **dadurch gekennzeichnet**, daß man die Wirkung der Kräfte durch Verschwenken der einen Umfangslinie gegenüber der anderen im Gleichgewicht hält.

4. Vorrichtung zum Schwerkraftbiegen von Glasscheiben auf einer Umfangsbiegeform, die mindestens zwei Rahmen umfaßt: einen ersten Rahmen (5) zum Tragen der zu biegenden Glasscheibe oder Glasscheiben während eines ersten Biegeschrittes, einen zweiten Rahmen (6), der an die Stelle des ersten Rahmens tritt, um den Umfang der Glasscheibe oder Glasscheiben während des zweiten Biegeschritts zu tragen, **dadurch gekennzeichnet**, daß Mittel (7, 8, 13, 14, 15, 16; 32, 33) zum Steuern der Wirkung der Kräfte vorgesehen sind, welche auf die Glasscheibe oder Glasscheiben während deren Übergangs von dem ersten Rahmen (5) auf den zweiten Rahmen (6) einwirken, welche durch Reaktion des zweiten Rahmens auf den Kontakt mit der Glasscheibe oder den Glasscheiben wirken.

5. Vorrichtung nach Anspruch 4, **dadurch gekennzeichnet**, daß die Mittel (7, 8, 13, 14, 15, 16) zum Steuern der Wirkung der auf die Glasscheibe oder Glasscheiben einwirkenden Kräfte eine schwenkbare und ausgeglichene Anordnung des einen Rahmens bezüglich des anderen umfassen.

6. Vorrichtung nach Anspruch 4 oder 5, **dadurch gekennzeichnet**, daß mindestens einer (6) der beiden Rahmen schwenkbar und ausgeglichen auf einer in der Symmetrieebene (7) der Vorrichtung liegenden Achse befestigt ist.

7. Vorrichtung nach einem der Ansprüche 4 bis 6, **dadurch gekennzeichnet**, daß der erste Rahmen (5; 26) und der zweite Rahmen (6; 29) beide die Form von durchgehenden starren Ringen haben und so gelagert sind, daß der Übergabevorgang vom ersten Rahmen (5) auf den zweiten Rahmen durch translatorische Bewegung in senkrechter Richtung erfolgt.

8. Vorrichtung nach einem der Ansprüche 4 bis 6, **dadurch gekennzeichnet**, daß der erste Rahmen (5) die Form eines starren Rings hat und daß der zweite Rahmen (6) schwenkbare Teile umfaßt, wobei der Übergang vom ersten Rahmen (5) auf den zweiten Rahmen durch eine Bewegung der schwenkbaren Teile erfolgt.

9. Vorrichtung nach Anspruch 8, **dadurch gekennzeichnet**, daß der zweite Rahmen (6) aus symmetrischen Halbrahmen (6a, 6b) besteht, die über eine in der Symmetrieebene liegende Anlenkung miteinander verbunden sind.

10. Vorrichtung nach Anspruch 9, **dadurch gekennzeichnet**, daß die beiden Halbrahmen (6a, 6b) um an Hebeln (15) pendelnd aufgehängte Drehlager (13) schwenkbar gelagert sind.

11. Vorrichtung nach Anspruch 9 oder 10, **dadurch gekennzeichnet**, daß die Schwenkachse (A-A) des ersten Rahmens (5) und die Achse der Anlenkungen (8) zusammenfallen.

12. Vorrichtung nach einem der Ansprüche 9 bis 11, **dadurch gekennzeichnet**, daß der erste Rahmen (5) und die Halbrahmen (6a, 6b) in der Arbeitsstellung des ersten Rahmens (5) durch verschwenkbare Riegel (10) miteinander verriegelt sind.

13. Vorrichtung nach Anspruch 9 bis 12, **dadurch gekennzeichnet**, daß das das Drehlager (18) für den Vorbiegerahmen (5) bildende Auge als senkrechtes Langloch (20) ausgebildet ist, so daß der erste Rahmen (5) in der Arbeitsstellung des zweiten Rahmens (6) unter dessen Niveau absenkbar ist.

14. Vorrichtung nach einem oder mehreren der Ansprüche 4 bis 13, **dadurch gekennzeichnet**, daß die beiden Rahmen auf einem verfahrbaren Wagen (1) angeordnet sind.

## Claims

1. Method for the frame bending of at least one glass sheet by gravity during which the stacked glass sheets or sheets, placed on a bending frame are raised to the deformation temperature and adopt the profile of the bending frame by the gravity effect, involving at least two gravity bending stages, whilst being peripherally supported along a first peripheral line during the first stage and along a second peripheral line during the second stage, with passage from one peripheral line to the other, characterized in that the passage from the first peripheral line to the second peripheral line takes place by controlling at all times the action of the forces exerted on the parts of the glass sheet or sheets coming into contact with the second peripheral line, by reaction of said second peripheral line to the contact of the glass sheet or sheets.

2. Method according to claim 1, characterized in that the passage from one peripheral line to the other takes place by balancing at all times the action of the forces exerted on the symmetrical portions of the glass sheet or sheets.

3. Method according to one of the claims 1 or 2, characterized in that the action of the forces is balanced by a pivoting of one peripheral line relative to the other.

4. Apparatus for the gravity frame bending of at least one glass sheet having at least two frames: a first frame (5) for supporting the periphery of the glass sheet or sheets to be bent during a first bending stage, a second frame (6) being substituted for the first for supporting the periphery of the glass sheet or sheets during the second bending stage, characterized in that it comprises means (7, 8, 13, 14, 15, 16; 32, 33) for controlling the action of the forces exerted on the glass sheet or sheets during the passage thereof from the first frame (5) to the second frame (6), which act by the reaction of the second frame to the contact of the glass sheet or sheets.

5. Apparatus according to claim 4, characterized in that the means (7, 8, 13, 14, 15, 16) for controlling the action of the forces exerted on the glass sheet or sheets comprise the pivoting, balanced mounting of one frame with respect to the other.

6. Apparatus according to one of the claims 4 or 5, characterized in that at least one (6) of the two frames is mounted in pivoting and balanced manner on a spindle (7) located in the plane of symmetry of the apparatus.

7. Apparatus according to one of the claims 4 to 6, characterized in that both the first frame (5; 26) and the second frame (6; 29) are in the form of continuous, rigid rings and are fitted in such a way that the transfer between the first frame and the second frame takes place by a vertical translation movement.

8. Apparatus according to one of the claims 4 to 6, characterized in that the first frame (5) is in the form of a rigid ring and in that the second frame (6) comprises pivoting portions, the transfer between the first frame (5) and the second frame (6) taking place by a movement of the pivoting portions.

9. Apparatus according to claim 8, characterized in that the second frame (6) is formed from two symmetrical half-frames (6a, 6b) interconnected by a coupling placed in the plane of symmetry.

10. Apparatus according to claim 9, characterized in that the two half-frames (6a, 6b) are fitted in pivoting manner on bearings (13) installed in pendulum form at the end of levers (15).

11. Apparatus according to one of the claims 9 or 10, characterized in that the pivot axis (A-A) of the first frame and the axis of the couplings (8) coincide.

12. Apparatus according to one of the claims 9 to 11, characterized in that the first frame (5) and the two half-frames (6a, 6b) are locked together by pivoting latches (10) in the operating position of the first frame.

13. Apparatus according to one of the claims 9 to 12, characterized in that the pivot bearing (18) of the first frame is in the form of an oblong hole (20), so that the first frame can be lowered below the level of the second frame when the latter is in the operating position.

14. Apparatus according to one of the claims 4 to 13, characterized in that the two frames are placed on a moving carriage (1).
